(19) Europäisches Patentamt
European Patent Office
Office européen des brevets

(11) **EP 2 618 165 B1**

(12) **FASCICULE DE BREVET EUROPEEN**

(45) Date de publication et mention
de la délivrance du brevet:
**31.12.2014 Bulletin 2015/01**

(51) Int Cl.:
***G01P 21/00*** *(2006.01)*

(21) Numéro de dépôt: **13151808.6**

(22) Date de dépôt: **18.01.2013**

(54) **Dispositif de mesure d'accélération comprenant une fonction d'étalonnage, et methode de mesure d'accélération y associee**

Beschleunigungsmessvorrichtung, die eine Eichungsfunktion umfasst, und entsprechende Beschleunigungsmessmethode

Device for measuring acceleration including a calibration function and related method for measuring acceleration

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.01.2012 FR 1200171**

(43) Date de publication de la demande:
**24.07.2013 Bulletin 2013/30**

(73) Titulaire: **Junghans T2M SAS**
**45240 La Ferte Saint Aubin (FR)**

(72) Inventeurs:
• **Andre, Guillaume**
**45100 Orleans (FR)**
• **Aureal, Thierry**
**45750 Saint Pryve Saint Mesmin (FR)**

(74) Mandataire: **Collet, Alain**
**Marks & Clerk France**
**Conseils en Propriété Industrielle**
**Immeuble Visium**
**22, Avenue Aristide Briand**
**94117 Arcueil Cedex (FR)**

(56) Documents cités:
**EP-A1- 0 999 449       EP-A1- 2 214 030**
**WO-A1-2008/139503     US-A- 5 804 697**
**US-A1- 2011 277 532**

• **VELTINK P H ET AL: "Procedure for in-use calibration of triaxial accelerometers in medical applications", SENSORS AND ACTUATORS A, ELSEVIER SEQUOIA S.A., LAUSANNE, CH, vol. 68, no. 1-3, 15 juin 1998 (1998-06-15), pages 221-228, XP004139834, ISSN: 0924-4247, DOI: 10.1016/S0924-4247(98)00049-1**

**EP 2 618 165 B1**

**Description**

La présente invention concerne un dispositif d'accélération comprenant une fonction d'étalonnage, ainsi qu'une méthode de mesure d'accélération. Elle s'applique notamment au domaine des dispositifs de sécurité et d'armement pour missiles, ou encore à tous les dispositifs de mise à feu utilisés par les fusées de bombes, de mortiers et d'artillerie, et par extension à tous les dispositifs dans lesquels une mesure d'accélération est réalisée.

Il existe de nombreux systèmes et dispositifs dans lesquels une mesure d'accélération est nécessaire. Il est par exemple nécessaire de réaliser une mesure de l'accélération dans des dispositifs tels que des missiles, notamment pour déterminer leur attitude ou leur vitesse. D'une manière typique, l'accélération est mesurée au moyen d'accéléromètres, selon un axe ou selon une pluralité d'axes.

Il est par exemple possible de recourir à des accéléromètres de type MEMS, selon le sigle désignant la terminologie anglaise « Micro ElectroMechanical System » par exemple fabriqués sur un substrat dans des matériaux à base de silicium. De tels accéléromètres présentent des erreurs de mesure typiquement proportionnelles à la plage de mesure considérée. Toutefois, l'erreur initiale liée à la tension dite « d'offset » de l'accéléromètre, c'est-à-dire l'erreur liée à la mesure de l'accélération aux alentours de 0g, peut être très élevée relativement aux valeurs à mesurer. La tension d'offset peut être notée $V_{0g}$. La valeur de la tension d'offset est principalement dépendante des dérives de fabrication de l'accéléromètre. L'erreur initiale liée à la tension d'offset peut être acceptable pour des mesures aux limites du domaine considéré, ou dans la plage de mesures spécifiée par le constructeur ; cependant l'incertitude sur la mesure d'accélération qu'elle induit peut s'avérer rédhibitoire dans le cadre de certaines applications. Il est ainsi nécessaire de procéder à un étalonnage des accéléromètres, visant à assurer que les valeurs qu'ils restituent par leurs mesures sont suffisamment précisément représentatives de l'accélération qu'ils subissent. Un tel étalonnage est par exemple décrit dans les documents suivants :

- US 2011/277532 A1,
- Article : VELTNIK P H ET AL : "Procedure for in-use of triaxial accelerometers in medical applications" - SENSORS AND ACTUATORS A, ELSEVIER SEQUOIA S.A., LAUSANE, CH - vol. 68, no. 1-3 15 juin 1998, pages 221-228
- EP2214030 A1

Selon des techniques connues de l'état de la technique, il peut être procédé à un étalonnage préalable d'un accéléromètre par des procédures d'étalonnage réalisées au moyen de bancs d'étalonnage dédiés. Par exemple, le système contenant un accéléromètre à étalonner peut être placé dans des positions déterminées, le système étant alors maintenu immobile, et des mesures d'accélération étant recueillies. Un étalonnage peut alors par exemple réalisé au sein du système, par une modification des valeurs restituées par l'accéléromètre en fonction des différentes valeurs recueillies pendant la période d'étalonnage. Le système peut également être soumis à des accélérations déterminées, par exemple en étant placé dans une centrifugeuse, pour le recueil de valeurs utiles dans la détermination des paramètres d'étalonnage de l'accéléromètre.

Un inconvénient de ces techniques connues, est que d'une part celles-ci imposent que des procédures relativement coûteuses, notamment en terme de temps, soient mises en oeuvre, et ce au moyen de dispositifs, par exemple des bancs d'étalonnage, également coûteux et encombrants. D'autre part, ces techniques supposent que la chaîne de mesure d'accélération du système considéré, utilise la mise en oeuvre d'une procédure d'étalonnage et/ou de correction des valeurs mesurées de manière logicielle. Or il peut être souhaitable, notamment dans certains systèmes critiques tels que les systèmes précités, c'est-à-dire des dispositifs de sécurité et d'armement pour missiles, ou encore des dispositifs de mise à feu utilisés par les fusées de bombes, de mortiers et d'artillerie, d'éviter autant que possible le recours à l'exécution de logiciels, dans un souci de sécurité et de robustesse.

Un but de la présente invention est de pallier au moins les inconvénients précités, en proposant un système de mesure d'accélération comprenant une fonction d'étalonnage, la fonction d'étalonnage pouvant être mise en oeuvre par des moyens purement matériels, et offrant une grande robustesse ainsi qu'une grande sécurité.

Un autre avantage de l'invention est qu'elle dispense de recourir à des installations et procédures d'étalonnage potentiellement coûteuses, lors de la fabrication des systèmes.

A cet effet, l'invention a pour objet un système de mesure d'accélération comprenant un premier accéléromètre apte à délivrer une valeur représentative d'une accélération suivant au moins un axe, dans une première plage de valeurs déterminée, un second accéléromètre apte à délivrer une valeur représentative d'une accélération suivant ledit au moins un axe, dans une seconde plage de valeurs déterminée, le système de mesure étant caractérisé en ce qu'il comprend des moyens de stockage d'au moins une valeur d'accélération délivrée par ledit premier accéléromètre, des moyens pour déterminer à partir de la valeur d'accélération délivrée par ledit second accéléromètre l'état dans lequel se trouve le système de mesure, configurés pour déterminer que le système se trouve dans une phase statique si la valeur d'accélération délivrée par ledit second accéléromètre est inférieure en valeur absolue à une valeur de seuil déterminée, et que le système se trouve dans une phase dite opérationnelle sinon, le système de mesure comprenant

2

des moyens de détermination configurés pour déterminer une valeur d'accélération dans la phase opérationnelle par une différence entre l'accélération mesurée par le premier accéléromètre et au moins une mesure d'accélération de référence du système dans la phase statique stockée par les moyens de stockage.

Dans un mode de réalisation de l'invention, le système de mesure peut comprendre des moyens de calcul configurés pour déterminer des valeurs moyennes des accélérations mesurées par lesdits accéléromètres, les valeurs d'accélérations stockées et déterminées étant alors des valeurs moyennes.

Dans un mode de réalisation de l'invention, les premier et second accéléromètres peuvent être des accéléromètres de type MEMS, réalisés dans un même substrat.

Dans un mode de réalisation de l'invention, les premier et second accéléromètres peuvent être des accéléromètres de type MEMS, et sont réalisés sur un substrat sur lequel sont également réalisés les moyens de calcul, les moyens de détermination et les moyens de stockage.

Dans un mode de réalisation de l'invention, les moyens de détermination peuvent être formés par un amplificateur différentiel.

Dans un mode de réalisation de l'invention, ladite seconde plage de valeurs déterminée peut être plus réduite que ladite première plage de valeurs déterminée.

Dans un mode de réalisation de l'invention, les moyens de stockage peuvent être formés par une mémoire.

Dans un mode de réalisation de l'invention, ladite première plage de valeurs déterminée peut s'étendre de -50 à +50 g.

Dans un mode de réalisation de l'invention, ladite seconde plage de valeurs déterminée peut s'étendre de -1,5 à +1,5 g.

La présente invention a également pour objet un dispositif de sécurité et d'armement pour missile, caractérisé en ce qu'il comprend un système de mesure d'accélération suivant l'un quelconque des modes de réalisations présentés.

La présente invention a également pour objet une méthode de mesure d'accélération d'un système, comprenant une première étape de mesure de l'accélération par un premier accéléromètre et un second accéléromètre suivie par une deuxième étape de comparaison de la valeur de l'accélération mesurée par le second accéléromètre avec une valeur de seuil déterminée, le système étant considéré dans une phase statique si la valeur de l'accélération mesurée par le second accéléromètre est inférieure à la valeur de seuil, et étant considéré comme dans une phase opérationnelle sinon, la deuxième étape étant suivie d'une étape de stockage stockant au moins une valeur de référence d'accélération mesurée par le premier accéléromètre lors de la phase statique, suivie d'une étape de détermination déterminant en phase opérationnelle l'accélération du système à partir d'une différence entre la valeur d'accélération mesurée par le premier accéléromètre et ladite valeur de référence d'accélération.

D'autres caractéristiques et avantages de l'invention apparaîtront à la lecture de la description, donnée à titre d'exemple, faite en regard des dessins annexés qui représentent :

- la figure 1, une vue en perspective illustrant, de manière synoptique, un système de mesure d'accélération à fonction d'étalonnage, selon un exemple de réalisation de l'invention ;
- la figure 2, un logigramme illustrant les différentes étapes mises en oeuvre par une fonction d'étalonnage, selon un exemple de réalisation de l'invention.

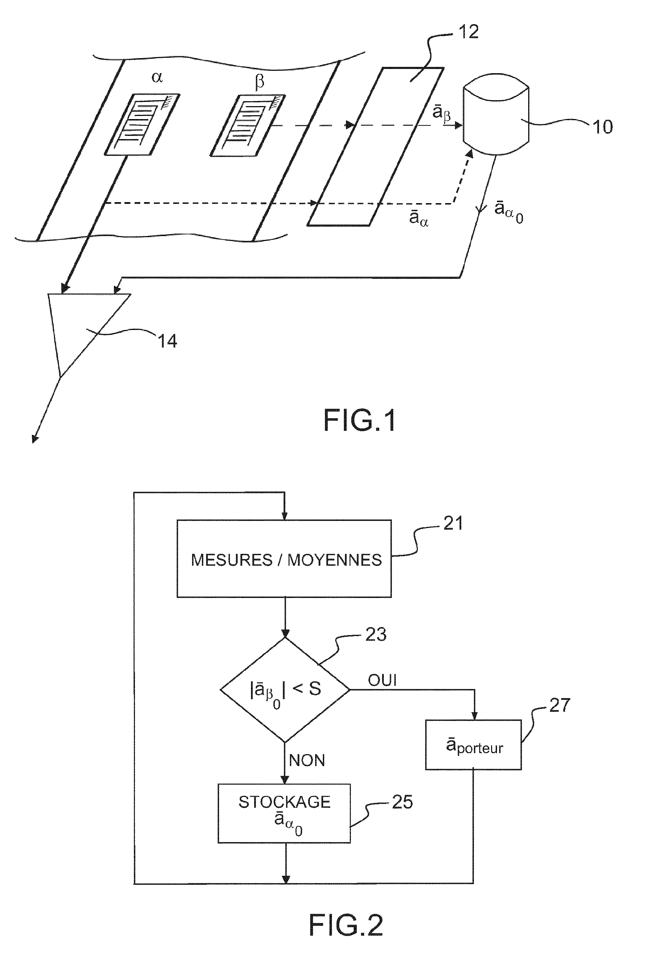

La figure 1 présente, de manière synoptique, un système de mesure d'accélération à fonction d'étalonnage, selon un exemple de réalisation de la présente invention.

Un système de mesure d'accélération peut comprendre un premier accéléromètre α dit accéléromètre principal, réalisant une mesure de l'accélération dans une première plage de valeurs déterminée. Selon une spécificité de la présente invention, le système de mesure peut comprendre un second accéléromètre β dit accéléromètre de référence, réalisant une mesure de l'accélération dans une seconde plage de valeurs déterminée. Les premier et second accéléromètres α, β peuvent par exemple être disposés de manière à mesurer une accélération selon un même axe. Ils peuvent également mesurer des accélérations chacun suivant une pluralité d'axes.

Selon une spécificité de la présente invention, il est proposé qu'une mesure d'accélération soit réalisée par le second accéléromètre β, afin de déterminer l'état dans lequel se trouve le système duquel l'accélération doit être mesurée. La mesure réalisée par le second accéléromètre β peut alors permettre de déterminer si le système est dans un état statique ou quasi-statique, ou bien si le système est dans un état d'opération. D'une manière typique, un dispositif de mesure d'accélération selon la présente invention peut être compris dans un missile ou une fusée, et il est alors déterminé si le missile ou la fusée est au sol, dans une phase préalable à son lancement, ou bien si celui-ci ou celle-ci a été mis à feu, se trouvant alors dans une phase opérationnelle. Il est à observer que outre les avantages procurés par la présente invention mentionnés précédemment, relatifs à la robustesse, il peut également être avantageux dans le cadre de telles applications, que des mesures visant à étalonner le système de mesure d'accélération puissent être effectuées de manière autonome, jusqu'au dernier instant possible où le missile ou la fusée et mis à feu. La période de stockage d'un tel système est typiquement longue et peut s'étendre sur plusieurs années, de sorte qu'un étalonnage qui serait effectué de manière préalable lors de la production du système pourrait s'avérer inefficace au moment du lancement en raisons de dérives progressives de performances.

Par exemple, si l'accélération telle que mesurée par le second accéléromètre β est inférieure à une valeur de seuil déterminée, par exemple 1,5 g, alors il est possible de considérer que le système est dans une phase statique ou quasi-statique, c'est-à-dire, dans l'exemple où le système est un missile ou une fusée, que celui-ci est au sol, dans une phase préalable au lancement.

Dès lors que la valeur d'accélération mesurée par le second accéléromètre β est dépassée, il peut alors être considéré que le système est dans une phase opérationnelle, c'est-à-dire dans une phase de vol, postérieure à sa mise à feu, lorsque le système considéré est un missile ou une fusée.

Selon une spécificité de la présente invention, il est proposé qu'au moins une mesure de l'accélération soit réalisée au moyen du premier accéléromètre α lorsque le système est dans une phase statique ou quasi-statique.

La valeur de l'accélération ainsi mesurée par le premier accéléromètre α peut alors former une valeur d'accélération initiale de référence et être stockée dans des moyens de stockage par exemple formés par une mémoire 10, pour servir par la suite de valeur de référence.

Dès lors, lorsque le système est en opération, l'accélération qu'il subit peut être déterminée par la mesure réalisée par le premier accéléromètre α, de laquelle la valeur d'accélération de référence stockée précitée peut être retranchée. L'erreur de mesure du premier accéléromètre α est ainsi réduite à son erreur de mesure dynamique. Les relations ci-après illustrent ce dernier point.

L'accélération telle que mesurée par le premier accéléromètre α dans une phase statique ou quasi-statique, par exemple une valeur moyenne de celle-ci, peut se formuler par la relation suivante :

$$\overline{a}_{\alpha 0} = \overline{a}_{réelle0} + \overline{\varepsilon}_{\alpha Biais} \qquad (1),$$

où

$\overline{a}_{\alpha 0}$ désigne la valeur moyenne de l'accélération mesurée par le premier accéléromètre α, $\overline{a}_{réelle0}$ représente la valeur moyenne de l'accélération réelle subie par le système en phase statique ou quasi-statique, et $\overline{\varepsilon}_{\alpha Biais}$ désigne la valeur moyenne du biais lié au premier accéléromètre α.

L'accélération réelle en phase statique ou quasi-statique $\overline{a}_{réelle0}$ peut se décomposer en une composante d'accélération en phase statique ou quasi-statique du porteur lui-même $\overline{a}_{porteur0}$, et une composante liée à la force de gravitation $\overline{a}_{gravitation}$, selon la relation suivante :

$$\overline{a}_{réelle0} = \overline{a}_{porteur0} + \overline{a}_{gravitation} \qquad (2).$$

Ainsi qu'explicité précédemment, si l'accélération telle que mesurée par le second accéléromètre β, ou par exemple la valeur absolue de la valeur moyenne de l'accélération telle que mesurée par le second accéléromètre β, notée $|\overline{a}_{\beta 0}|$ est inférieure à une valeur de seuil déterminée, par exemple 1,5 g, en valeur absolue, alors il est possible de considérer que le système est dans une phase statique ou quasi-statique. Si cette valeur absolue dépasse ladite valeur de seuil déterminée, alors il peut être considéré que le système est dans une phase opérationnelle.

Lorsque le système est considéré comme étant en phase opérationnelle, la valeur moyenne de l'accélération $\overline{a}_{\alpha}$ mesurée par le premier accéléromètre α peut se formuler selon la relation suivante :

$$\overline{a}_{\alpha} = \overline{a}_{réelle} + \overline{\varepsilon}_{\alpha} \qquad (3),$$

où

$\overline{a}_{réelle}$ désigne la valeur moyenne de l'accélération réelle subie par le système en phase opérationnelle, et $\overline{\varepsilon}_{\alpha}$ désigne la valeur moyenne de l'erreur globale liée à la mesure du premier accéléromètre α.

La valeur moyenne de l'accélération réelle $\overline{a}_{réelle}$ peut se décomposer en une composante d'accélération en phase opérationnelle du porteur lui-même $\overline{a}_{porteur}$, et une composante liée à la force de gravitation $\overline{a}_{gravitation}$, selon la relation suivante:

$$\overline{a}_{r\acute{e}elle} = \overline{a}_{porteur} + \overline{a}_{gravitation} \qquad\qquad (4).$$

La valeur moyenne de l'erreur globale liée à la mesure du premier accéléromètre $\overline{\varepsilon}_\alpha$ peut se décomposer en une composante de biais $\overline{\varepsilon}_{\alpha Biais}$ et une composante liée à la valeur moyenne de l'erreur de mesure $\overline{\varepsilon}_{\alpha Mesure}$, suivant la relation :

$$\overline{\varepsilon}_\alpha = \overline{\varepsilon}_{\alpha Biais} + \overline{\varepsilon}_{\alpha Mesure} \qquad\qquad (5).$$

La grandeur d'intérêt est la valeur d'accélération du porteur lui-même en phase opérationnelle, c'est-à-dire la valeur $\overline{a}_{porteur}$ précitée.

A partir des relations (1) à (5) ci-dessus, et de l'hypothèse selon laquelle la valeur d'accélération en phase statique ou quasi-statique du porteur lui-même $\overline{a}_{porteur0}$ citée précédemment dans la relation (2) est nulle, la grandeur d'intérêt peut être formulée par la relation suivante :

$$\overline{a}_{porteur} = \left(\overline{a}_\alpha - \overline{a}_{\alpha 0}\right) + \overline{\varepsilon}_{\alpha Mesure} \qquad\qquad (6).$$

Il relève de la relation (6) ci-dessus que l'erreur liée à la mesure par le premier accéléromètre $\alpha$ est réduite à son erreur de mesure dynamique.

Avantageusement, des mesures d'accélération peuvent être réalisées de manière périodique, la période pour les mesures pouvant être la même dans les phases statiques ou quasi-statiques et pendant les phases opérationnelles, ou bien pouvant être différente : il est en effet par exemple possible de choisir une période plus longue pour les mesures d'accélération dans les phases statiques ou quasi-statiques, par rapport à la période choisie pour les mesures d'accélération dans les phases opérationnelles. La période choisie pour les mesures d'accélération peut par exemple être de l'ordre de la milliseconde.

Avantageusement, le système de mesure d'accélération peut comprendre des moyens de calcul 12 configurés pour calculer une moyenne glissante sur un nombre déterminé d'échantillons de mesure d'accélération.

Par exemple, la valeur moyenne $\overline{x}_n$ d'accélération pour un échantillon n peut être déterminée au moyen de la relation suivante :

$$\overline{x}_n = \overline{x}_{n-1} + \frac{x_n - x_{n-N}}{N} \qquad\qquad (7),$$

dans laquelle $\overline{x}_{n-1}$ désigne la valeur moyenne d'accélération pour l'échantillon n-1, $x_n$ désigne la valeur d'accélération mesurée pour l'échantillon n, N désigne le nombre d'échantillons utilisés pour le calcul de la moyenne glissante. N peut par exemple être choisi égal à 8.

La mémoire 10 peut par exemple permettre le stockage des différentes valeurs instantanées pour les différents échantillons de mesure de l'accélération par le premier et le second accéléromètres et/ou le stockage des valeurs moyennes $\overline{a}_\alpha$, et $\overline{a}_\beta$ calculées respectivement pour le premier et le second accéléromètres.

Le système de mesure peut avantageusement comprendre des moyens de détermination configurés pour réaliser une différence entre le signal restitué par le premier accéléromètre $\alpha$ et la mesure d'accélération de référence stockée précitée, notée $\overline{a}_{\alpha 0}$. Cette dernière valeur peut par exemple être la dernière valeur d'accélération mesurée par le premier accéléromètre $\alpha$ en phase statique ou quasi-statique.

Les signaux peuvent par exemple se présenter sous la forme de tensions, et une différence peut être réalisée par des moyens physiques tels qu'un amplificateur différentiel 14, restituant un signal représentatif de la mesure d'accélération corrigée par la valeur d'accélération de référence stockée.

Selon l'invention, la plage d'utilisation du second accéléromètre $\beta$ est réduite par rapport à la plage d'utilisation du premier accéléromètre $\alpha$, dont la plage d'utilisation correspond aux besoins de l'application prévue du système dans lequel est compris le système de mesure d'accélération selon la présente invention. D'une manière typique, les premier et second accéléromètres $\alpha$, $\beta$ peuvent être formés par des peignes capacitifs inter-digités, comprenant par exemple une pluralité de peignes fixes et une pluralité de peignes mobiles, les peignes mobiles se déplaçant sous l'effet de l'accélération, modifiant ainsi les valeurs des capacités définies entre les peignes mobiles et les peignes fixes. D'une manière typique également, une mesure d'un rapport des capacités différentielles peut être utilisée, dans le but de fournir une précision de mesure accrue. Dans un tel cas, le rapport des capacités est proportionnel à l'accélération subie par l'accéléromètre.

Un accéléromètre peut recevoir une tension d'entrée $V_{dd}$ constante, et la tension de sortie $V_{out}$ dépend de la tension d'entrée et de l'accélération, selon une loi qui peut être formulée par la relation suivante :

$$V_{out} = Sensibilité \times Accélération + V_{Og} \qquad (8),$$

la valeur de sensibilité de l'accéléromètre étant exprimée en Volt/(m.s$^{-2}$).

Par exemple la plage de fonctionnement du premier accéléromètre $\alpha$ peut être de -50g/+50g, et la plage de fonctionnement du second accéléromètre $\beta$ peut être de -1,5g/+1,5g.

La tension d'offset du premier accéléromètre $\alpha$ peut par exemple avoir une valeur théorique de 5.Vdd, et varier en pratique entre 0,46.Vdd et 0,54.Vdd. Pour une tension d'entrée Vdd égale à 5 V par exemple, la tension de sortie sous une accélération nulle peut ainsi varier entre 2,3 V et 2,7 V, ce qui correspond à une incertitude de la mesure de +/- 5,3 g.

La tension d'offset du second accéléromètre $\beta$ peut par exemple varier entre 0,44.Vdd et 0,56.Vdd, ce qui correspond à une tension de sortie pouvant varier entre 2,2 et 2,8 V, soit à une incertitude de la mesure de +/-0,25 g, soit une incertitude nettement moindre que l'incertitude de la mesure réalisée par le premier accéléromètre $\alpha$.

Les accéléromètres $\alpha$ et $\beta$ peuvent être du type MEMS, selon le sigle désignant la terminologie anglaise « Micro Electro Mechanical Systems », et peuvent par exemple être réalisés sur des substrats, par exemple à base de Silicium, par des procédés de lithographie. Les deux accéléromètres $\alpha$ et $\beta$ peuvent être par exemple réalisés sur un même substrat.

Avantageusement, les moyens de stockage, par exemple formés par la mémoire 10, les moyens de calcul 12, ainsi que les moyens de détermination précités, par exemple formés par l'amplificateur différentiel 14, peuvent être également réalisés sur le même substrat, ainsi que la mémoire 10.

Un avantage de la présente invention est lié à l'utilisation de dispositifs matériels, et non de solutions logicielles, conférant au système une grande fiabilité et une sécurité maximale.

Un autre avantage est lié au fait que le second accéléromètre $\beta$ peut être utilisé, une fois l'étalonnage réalisé - en d'autres termes, une fois la valeur de référence d'accélération stockée, et une fois le passage dans la phase opérationnelle détecté - pour d'autres fonctions : par exemple le deuxième accéléromètre $\beta$ peut être utilisé comme inclinomètre ou pour mesurer les faibles accélération avec précision.

La présente invention a également pour objet une méthode de mesure d'accélération. Cette méthode est illustrée par la figure 2 qui présente un logigramme. Ainsi que cela est décrit précédemment, la méthode d'étalonnage peut comprendre une première étape 21 de mesure des accélérations par le premier et le second accéléromètres $\alpha$, $\beta$ et avantageusement de détermination des valeurs moyennes des accélérations.

La première étape 21 peut être suivie par une deuxième étape 23 de comparaison de la valeur de l'accélération mesurée par le second accéléromètre $\beta$ ou de la valeur moyenne correspondante avec la valeur de seuil déterminée notée S.

S'il est déterminé à l'issue de la deuxième étape 23 que le système est dans la phase statique ou quasi-statique, alors la deuxième étape 23 peut être suivie par une étape de stockage 25 de la valeur de référence d'accélération mesurée par le premier accéléromètre $\alpha$ ou la valeur moyenne y correspondant.

S'il est déterminé à l'issue de la deuxième étape 23 que le système est dans la phase opérationnelle, alors la deuxième étape 23 peut être suivie par une étape de détermination 27 de la valeur d'intérêt précitée $\overline{a}_{porteur}$. A l'issue de l'étape de stockage 25 ou de l'étape de détermination 27, la méthode peut reprendre à la première étape 21.

Avantageusement, par exemple dans le cas où le système considéré est un missile ou une fusée, celui-ci peut comprendre des moyens additionnels de détection de lancement, par exemple formés par un capteur de sortie de tube de lancement. Dans un tel cas, une méthode de mesure d'accélération peut comprendre une première étape additionnelle lors de laquelle il est vérifié que le lancement du système a bien été effectué, ainsi qu'une seconde étape additionnelle fixant une temporisation pendant laquelle il n'est pas procédé à la détermination de la valeur d'intérêt. Par exemple, la période de temporisation peut être fixée à 30 millisecondes. Les étapes additionnelles précitées peuvent être réalisées à la suite de la deuxième étape 23, avant l'étape de détermination 27.

Avantageusement encore, une troisième étape additionnelle peut être réalisée à la suite de l'étape de détermination 27, et peut permettre la comparaison de l'accélération du porteur, valeur d'intérêt, avec des gabarits, dont les résultats permettent d'activer des moyens de commande du système de manière appropriée.

**Revendications**

1. Système de mesure d'accélération comprenant un premier accéléromètre ($\alpha$) apte à délivrer une valeur représentative d'une accélération suivant au moins un axe, dans une première plage de valeurs déterminée, et des moyens de stockage (10) d'au moins une valeur d'accélération de référence délivrée par ledit premier accéléromètre ($\alpha$), **caractérisé en ce qu'**il comprend en outre un second accéléromètre ($\beta$) apte à délivrer une valeur représentative d'une accélération suivant ledit au moins un axe, dans une seconde plage de valeurs déterminée, la seconde plage étant réduite par rapport à la première plage , des moyens pour déterminer à partir de la valeur d'accélération délivrée par ledit second accéléromètre ($\beta$) l'état dans lequel se trouve le système de mesure, configurés pour déterminer que le système se trouve dans une phase statique si la valeur d'accélération délivrée par ledit second accéléromètre ($\beta$) est inférieure en valeur absolue à une valeur de seuil (S) déterminée, et que le système se trouve dans une phase dite opérationnelle sinon, le système de mesure comprenant des moyens pour réaliser au moins une mesure d'accélération au moyen du premier accéléromètre lors d'une phase statique et pour stocker au moins une valeur mesurée comme valeur d'accélération de référence dans les moyens de stockage (10), et des moyens de détermination (14) configurés pour déterminer une valeur d'accélération dans la phase opérationnelle par une différence entre l'accélération mesurée par le premier accéléromètre ($\alpha$) et ladite valeur de référence d'accélération.

2. Système de mesure d'accélération suivant la revendication 1, **caractérisé en ce qu'**il comprend des moyens de calcul (12) configurés pour déterminer des valeurs moyennes des accélérations mesurées par lesdits accéléromètres ($\alpha$, $\beta$), les valeurs d'accélérations stockées et déterminées étant alors des valeurs moyennes.

3. Système de mesure d'accélération suivant l'une quelconque des revendications précédentes, **caractérisé en ce que** les premier et second accéléromètres ($\alpha$, $\beta$) sont des accéléromètres de type MEMS, réalisés dans un même substrat.

4. Système de mesure d'accélération suivant l'une quelconque des revendications 1 à 3, **caractérisé en ce que** les premier et second accéléromètres ($\alpha$, $\beta$) sont des accéléromètres de type MEMS, et sont réalisés sur un substrat sur lequel sont également réalisés les moyens de calcul (12), les moyens de détermination (14) et les moyens de stockage (10).

5. Système de mesure d'accélération suivant la revendication 4, **caractérisé en ce que** les moyens de détermination (14) sont formés par un amplificateur différentiel.

6. Système de mesure d'accélération suivant l'une quelconque des revendications précédentes, **caractérisé en ce que** ladite seconde plage de valeurs déterminée est plus réduite que ladite première plage de valeurs déterminée.

7. Système de mesure d'accélération suivant l'une quelconque des revendications précédentes, **caractérisé en ce que** les moyens de stockage sont formés par une mémoire (10).

8. Système de mesure d'accélération suivant l'une quelconque des revendications précédentes, **caractérisé en ce que** ladite première plage de valeurs déterminée s'étend de -50 à +50 g.

9. Système de mesure d'accélération suivant l'une quelconque des revendications précédentes, **caractérisé en ce que** ladite seconde plage de valeurs déterminée s'étend de -1,5 à +1,5 g.

10. Dispositif de sécurité et d'armement pour missile, **caractérisé en ce qu'**il comprend un système de mesure d'accélération suivant l'une quelconque des revendications précédentes.

11. Méthode de mesure d'accélération d'un système suivant l'une quelconque des revendications précédentes, comprenant une première étape (21) de mesure de l'accélération par le premier accéléromètre ($\alpha$) et le second accéléromètre ($\beta$) suivie par une deuxième étape (23) de comparaison de la valeur de l'accélération mesurée par le second accéléromètre ($\beta$) avec la valeur de seuil déterminée (S), le système étant considéré dans une phase statique si la valeur de l'accélération mesurée par le second accéléromètre ($\beta$) est inférieure à la valeur de seuil, et étant considéré comme dans une phase opérationnelle sinon, la deuxième étape (23) étant suivie d'une étape de stockage (25) stockant au moins une valeur de référence d'accélération mesuré par le premier accéléromètre ($\alpha$) lors de la

phase statique, suivie d'une étape de détermination (27) déterminant en phase opérationnelle l'accélération du système à partir d'une différence entre la valeur d'accélération mesurée par le premier accéléromètre ($\alpha$) et ladite valeur de référence d'accélération.

**Patentansprüche**

1. System für die Beschleunigungsmessung, das einen ersten Beschleunigungsmesser ($\alpha$), der imstande ist, einen repräsentativen Wert einer Beschleunigung gemäß mindestens einer Achse in einem ersten bestimmten Wertebereich zu liefern, und Speichermittel (10) mindestens eines Referenz-Beschleunigungswerts, der von dem ersten Beschleunigungsmesser ($\alpha$) bereitgestellt wird, umfasst, **dadurch gekennzeichnet, dass** es ferner einen zweiten Beschleunigungsmesser ($\beta$), der imstande ist, einen repräsentativen Wert einer Beschleunigung gemäß der mindestens einen Achse in einem zweiten bestimmten Wertebereich zu liefern, wobei der zweite Bereich im Verhältnis zum ersten Bereich reduziert ist, Mittel, um ab dem von dem zweiten Beschleunigungsmesser ($\beta$) gelieferten Beschleunigungswert den Zustand zu bestimmen, in dem sich das Messsystem befindet, die konfiguriert sind, um zu bestimmen, dass sich das System in einer statischen Phase befindet, wenn der von dem zweiten Beschleunigungsmesser ($\beta$) gelieferte Beschleunigungswert im absoluten Wert kleiner ist als ein bestimmter Grenzwert (S), und dass sich das System ansonsten in einer so genannten operativen Phase befindet, wobei das Messsystem Mittel umfasst, um in einer statischen Phase mindestens eine Beschleunigungsmessung mit dem ersten Beschleunigungsmesser durchzuführen und um mindestens einen gemessenen Wert als Referenz-Beschleunigungswert in den Speichermitteln (10) zu speichern, und Bestimmungsmittel (14), die konfiguriert sind, um einen Beschleunigungswert in der operativen Phase durch eine Differenz zwischen der von dem ersten Beschleunigungsmesser ($\alpha$) gemessenen Beschleunigung und dem Referenz-Beschleunigungswert zu bestimmen, umfasst.

2. System für die Beschleunigungsmessung nach Anspruch 1, **dadurch gekennzeichnet, dass** es Berechnungsmittel (12) umfasst, die konfiguriert sind, um Durchschnittswerte der von den Beschleunigungsmessern ($\alpha$, $\beta$) gemessenen Beschleunigungen zu bestimmen, wobei die bestimmten und gespeicherten Beschleunigungswerte dann Durchschnittswerte sind.

3. System für die Beschleunigungsmessung nach einem der vorangehenden Ansprüche, **dadurch gekennzeichnet, dass** der erste und zweite Beschleunigungsmesser ($\alpha$, $\beta$) Beschleunigungsmesser vom Typ MEMS sind, die in einem selben Substrat realisiert sind.

4. System für die Beschleunigungsmessung nach einem der Ansprüche 1 bis 3, **dadurch gekennzeichnet, dass** der erste und zweite Beschleunigungsmesser ($\alpha$, $\beta$) Beschleunigungsmesser vom Typ MEMS sind und auf einem Substrat realisiert sind, auf dem die Berechnungsmittel (12), die Bestimmungsmittel (14) und die Speichermittel (10) ebenfalls realisiert sind.

5. System für die Beschleunigungsmessung nach Anspruch 4, **dadurch gekennzeichnet, dass** die Bestimmungsmittel (14) von einem Differentialverstärker gebildet sind.

6. System für die Beschleunigungsmessung nach einem der vorangehenden Ansprüche, **dadurch gekennzeichnet, dass** der zweite bestimmte Wertebereich reduzierter ist als der erste bestimmte Wertebereich.

7. System für die Beschleunigungsmessung nach einem der vorangehenden Ansprüche, **dadurch gekennzeichnet, dass** die Speichermittel von einem Speicher (10) gebildet sind.

8. System für die Beschleunigungsmessung nach einem der vorangehenden Ansprüche, **dadurch gekennzeichnet, dass** sich der erste bestimmte Wertebereich von -50 bis +50 g erstreckt.

9. System für die Beschleunigungsmessung nach einem der vorangehenden Ansprüche, **dadurch gekennzeichnet, dass** sich der zweite bestimmte Wertebereich von -1,5 bis +1,5 g erstreckt.

10. Sicherheits- und Ladevorrichtung für eine Rakete, **dadurch gekennzeichnet, dass** sie ein System für die Beschleunigungsmessung nach einem der vorangehenden Ansprüche umfasst.

11. Messmethode der Beschleunigung eines Systems nach einem der vorangehenden Ansprüche, die einen ersten Messschritt (21) der Beschleunigung durch den ersten Beschleunigungsmesser ($\alpha$) und den zweiten Beschleuni-

gungsmesser (β) umfasst, gefolgt von einem zweiten Vergleichsschritt (23) des von dem zweiten Beschleunigungsmesser (β) gemessenen Beschleunigungswerts mit dem bestimmten Grenzwert (S), wobei das System als in einer statischen Phase betrachtet wird, wenn der von dem zweiten Beschleunigungsmesser (β) gemessene Beschleunigungswert kleiner ist als der Grenzwert, und anderenfalls als in einer operativen Phase betrachtet wird, wobei dem zweiten Schritt (23) ein Speicherschritt (25) folgt, bei dem mindestens ein von dem ersten Beschleunigungsmesser (α) während der statischen Phase gemessener Referenz-Beschleunigungswert gespeichert wird, gefolgt von einem Bestimmungsschritt (27), bei dem in operativer Phase die Beschleunigung des Systems ausgehend von einer Differenz zwischen dem von dem ersten Beschleunigungsmesser (α) gemessenen Beschleunigungswert und dem Referenz-Beschleunigungswert bestimmt wird.

**Claims**

1. An acceleration measurement system comprising a first accelerometer (α) designed to deliver a value representing an acceleration along at least one axis, in a first determined range of values, and means (10) for storing at least one reference acceleration value delivered by said first accelerometer (α),
**characterised in that** it further comprises a second accelerometer (β) designed to deliver a value representing an acceleration along said at least one axis, in a second determined range of values, said second range being smaller than said first range, means for determining, on the basis of the acceleration value delivered by said second accelerometer (β), the state in which said measurement system is found, which means are configured to determine that said system is found in a static phase if the acceleration value delivered by said second accelerometer (β) is lower by absolute value than a determined threshold value (S) and that said system is otherwise found in a phase that is referred to as operational phase, said measurement system comprising means for carrying out at least one acceleration measurement using said first accelerometer during a static phase and for storing at least one measured value as reference acceleration value in said storage means (10), and determination means (14) configured to determine an acceleration value in said operational phase through a difference between the acceleration measured by said first accelerometer (α) and said reference acceleration value.

2. The acceleration measurement system according to claim 1, **characterised in that** it comprises computation means (12) configured to determine mean values of the accelerations measured by said accelerometers (α, β), the stored and determined values of accelerations then being mean values.

3. The acceleration measurement system according to any one of the preceding claims, **characterised in that** said first and second accelerometers (α, β) are accelerometers of the MEMS type produced on the same substrate.

4. The acceleration measurement system according to any one of claims 1 to 3, **characterised in that** said first and second accelerometers (α, β) are accelerometers of the MEMS type and are produced on a substrate on which said computation means (12), said determination means (14) and said storage means (10) are also produced.

5. The acceleration measurement system according to claim 4, **characterised in that** said determination means (14) are made up of a differential amplifier.

6. The acceleration measurement system according to any one of the preceding claims, **characterised in that** said second range of determined values is smaller than said first range of determined values.

7. The acceleration measurement system according to any one of the preceding claims, **characterised in that** said storage means are made up of a memory (10).

8. The acceleration measurement system according to any one of the preceding claims, **characterised in that** said first range of determined values extends from -50 to +50 g.

9. The acceleration measurement system according to any one of the preceding claims, **characterised in that** said second range of determined values extends from -1.5 to +1.5 g.

10. A safety and arming device for a missile, **characterised in that** it comprises an acceleration measurement system according to any one of the preceding claims.

11. An acceleration measurement method of a system according to any one of the preceding claims, comprising a first step (21) of measuring acceleration using said first accelerometer ($\alpha$) and said second accelerometer ($\beta$), followed by a second step (23) of comparing the acceleration value measured by said second accelerometer ($\beta$) with the determined threshold value (S), said system being considered to be in a static phase if the value of the acceleration measured by said second accelerometer ($\beta$) is lower than the threshold value and being considered to be in an operational phase otherwise, said second step (23) being followed by a storage step (25) storing at least one reference acceleration value measured by said first accelerometer ($\alpha$) during said static phase, followed by a determination step (27) determining, during the operational phase, the acceleration of said system on the basis of a difference between the acceleration value measured by said first accelerometer ($\alpha$) and said reference acceleration value.

$\bar{a}_\beta$

$\bar{a}_\alpha$

$\bar{a}_{\alpha_0}$

FIG.1

MESURES / MOYENNES — 21

$|\bar{a}_{\beta_0}| < S$ — 23

OUI

NON

$\bar{a}_{porteur}$ — 27

STOCKAGE $\bar{a}_{\alpha_0}$ — 25

FIG.2

## RÉFÉRENCES CITÉES DANS LA DESCRIPTION

**Documents brevets cités dans la description**

- US 2011277532 A1

- EP 2214030 A1

**Littérature non-brevet citée dans la description**

- Procedure for in-use of triaxial accelerometers in medical applications. **VELTNIK P H et al.** SENSORS AND ACTUATORS A. ELSEVIER SEQUOIA S.A, 15 Juin 1998, vol. 68, 221-228